# EUROPEAN PATENT SPECIFICATION

(11) **EP 4 411 273 B1**
(45) Date of publication and mention of the grant of the patent: **30.04.2025**
(21) Application number: 22952140.6
(22) Date of filing: 23.12.2022
(51) Int. Cl.: F24H 9/20, F24H 15/152, F24H 15/38, F24H 15/414, F24H 15/429, F25B 49/02, F24H 15/421, F25B 30/02

(54) **CONTROL METHOD AND APPARATUS FOR HEAT PUMP ENGINEERING, AND DEVICE AND STORAGE MEDIUM**
STEUERUNGSVERFAHREN UND -VORRICHTUNG FÜR WÄRMEPUMPENTECHNIK SOWIE VORRICHTUNG UND SPEICHERMEDIUM
PROCÉDÉ ET APPAREIL DE COMMANDE ET APPAREIL POUR INGÉNIERIE DE POMPE À CHALEUR, ET DISPOSITIF ET SUPPORT DE STOCKAGE

(43) Date of publication of application: 07.08.2024
(73) Proprietor: GUANGDONG PHNIX ECO-ENERGY SOLUTION LTD., Guangzhou, Guangdong 511470 (CN)
(72) Inventor: JIANG, Hao, Guangzhou, Guangdong 511470 (CN); PAN, Qun, Guangzhou, Guangdong 511470 (CN); LEI, Pengfei, Guangzhou, Guangdong 511470 (CN); ZHANG, Li, Guangzhou, Guangdong 511470 (CN); LIU, Zhili, Guangzhou, Guangdong 511470 (CN)
(74) Representative: Monteiro Alves, Inês
(86) International application number: PCT/CN2022/141291
(87) International publication number: WO 2024/130684

(56) References cited:
- CN-A- 105 157 087
- CN-A- 105 157 087
- CN-A- 106 969 473
- CN-A- 109 268 924
- CN-A- 111 426 059
- CN-A- 111 426 059
- CN-A- 111 795 525
- CN-A- 111 795 525
- CN-U- 207 422 557
- JP-A- 2015 081 708

## Description

### TECHNICAL FIELD

The present application relates to the field of heat pump control technologies, in particular to a control method, control apparatus and control device for a heat pump system and a storage medium.

### BACKGROUND

A conventional centralized control, i.e., a control device for a heat pump system, is to control the quantity of heat pumps to be turned on in the heat pump system, so as to control the total output capacity of a water heating system. The centralized control may set a corresponding target water supply temperature for each heat pump in the heat pump system, when each heat pump reaches its own target water supply temperature, it is turned off. For example, in a case that it requires the total water supply temperature to be 50°C in the water heating system, the centralized control may set such different target water supply temperatures as 51°C, 50°C, 49°C, and 48°C for the heat pumps in the heat pump system respectively. When the total water supply temperature reaches 48°C, the centralized control controls one part of the heat pumps to be turned off. When the total water supply temperature reaches 49°C, the centralized control controls another part of the heat pumps to be turned off, so that the closer the water temperature is to the total water supply temperature, the less the quantity of heat pumps that are turned on in the heat pump system, thereby to control the total output capacity of the water heating system to some extent.

It has been realized that the issue that the total water supply temperature cannot be reached due to that when a water temperature is close to the total water supply temperature and most of the heat pumps have been turned off occurs easily in the existing water heating system. Due to the frequent occurrence of the issue that the total water supply temperature cannot be reached, the water heating efficiency of the heat pump system is relatively low. CN 111426059A discloses a control method and device of a multi-unit parallel type heat pump system. CN 111795525A discloses a control method and a control terminal for a heat pump unit and a storage medium. CN 105157087A discloses a control method and device of a heat pump unit. CN 109268924A discloses a method for controlling the on-off quantity of a heat pump unit. CN 207422557U discloses an air conditioning system.

### SUMMARY

The present application provides a control method, control apparatus and control device for a heat pump system and a storage medium, so as to improve the water heating efficiency of the heat pump system.

In a first aspect, the present application provides a control method for a heat pump system with a plurality of heat pumps, including:
obtaining a system requirement value of a current period and a historical level of a previous period, and performing level prediction for the current period based on the system requirement value to obtain a candidate level; where the historical level is used to represent the quantity of heat pumps that were in operation in the previous period of the current period, and the candidate level is used to represent the quantity of heat pumps that are to be in operation in the current period;
comparing the candidate level with the historical level to obtain a target level; where the target level is used to represent the total quantity of heat pumps to be in operation in the heat pump system; and
controlling one or more heat pumps in the heat pump system to be turned on or off based on the target level.

In a second aspect, the present application provides a control apparatus for a heat pump system with a plurality of heat pumps, including:
an obtaining and determination module, configured to obtain a system requirement value of a current period and a historical level of a previous period, and perform level prediction for the current period based on the system requirement value to obtain a candidate level; where the historical level is used to represent the quantity of heat pumps that were in operation in the previous period of the current period, and the candidate level is used to represent the quantity of heat pumps that are to be in operation in the current period;
a comparison module, configured to compare the candidate level with the historical level to obtain a target level; where the target level is used to represent the total quantity of heat pumps to be in operation in the heat pump system;
a control module, configured to control one or more heat pumps in the heat pump system to be turned on or off based on the target level.

In a third aspect, the present application provides a control device for a heat pump system, including a memory and at least one processor, where instructions are stored in the memory, the at least one processor calls the instructions in the memory, to cause the control device for the heat pump system to implement the above-mentioned control method for the heat pump system.

In a fourth aspect, the present application provides a computer-readable storage medium having stored thereon instructions, where the instructions are executed by a processor to implement the above-mentioned control method for the heat pump system.

In the technical solutions of the present application, a system requirement value of a current period and a historical level of a previous period are obtained and level prediction is performed for the current period based on the system requirement value to obtain a candidate level, the candidate level is compared with the historical level to obtain a target level; and one or more heat pumps in the heat pump system are controlled to be turned on or off based on the target level. In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that a total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

### BRIEF DESCRIPTION OF THE DRAWINGS

Fig. 1 is a schematic diagram of an embodiment of a control method for a heat pump system according to the embodiments of the present application;
Fig. 2 is a schematic diagram of another embodiment of the control method for the heat pump system according to the embodiments of the present application;
Fig. 3 is a schematic diagram of yet another embodiment of the control method for the heat pump system according to the embodiments of the present application;
Fig. 4 is a schematic diagram of still yet another embodiment of the control method for the heat pump system according to the embodiments of the present application;
Fig. 5 is a schematic diagram of still yet another embodiment of the control method for the heat pump system according to the embodiments of the present application;
Fig. 6 is a schematic diagram of an embodiment of a PID level matching table according to the embodiments of the present application;
Fig. 7 is a schematic diagram of an embodiment of a control apparatus for a heat pump system according to the embodiments of the present application;
Fig. 8 is a schematic diagram of another embodiment of the control apparatus for the heat pump system according to the embodiments of the present application; and
Fig. 9 is a schematic diagram of an embodiment of a control device for a heat pump system according to the embodiments of the present application.

### DETAILED DESCRIPTION

The present application provides a control method, control apparatus and control device for a heat pump system and a storage medium, so as to improve the water heating efficiency of the heat pump system.

Terms such as "first", "second", "third" and "fourth" in the description and claims of the present application are used to differentiate similar objects, and not necessarily used to describe a specific sequence or order. It should be appreciated that the data used in this way may be interchanged under an appropriate circumstance, so that the embodiment of the present application described herein, for example, may be implemented in a sequence other than those illustrated or described herein. Moreover, terms "include", "have" and any other variation thereof are intended to encompass non-exclusive inclusion, such that a process, method, system, product or device including a series of steps or units includes not only those steps or elements, but also other steps or units not explicitly listed, or steps or units inherent in the process, method, system, product or device.

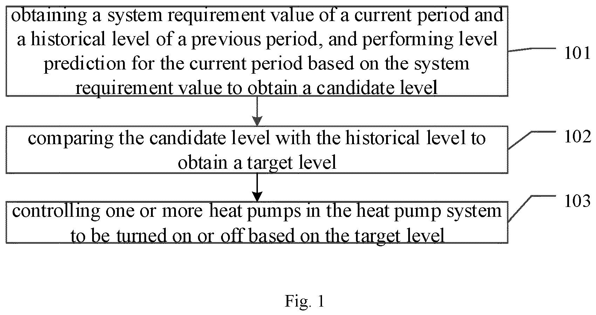

To facilitate understanding, a specific process of the embodiments of the present application is described below. Please refer to Fig. 1, an embodiment of the control method for the heat pump system according to the embodiments of the present application includes following steps.

101, obtaining a system requirement value of a current period and a historical level of a previous period, and performing level prediction for the current period based on the system requirement value to obtain a candidate level.

It should be appreciated that the present application may be implemented by a control apparatus for the heat pump system, or a control device for the heat pump system, which is not particularly defined herein. The embodiments of the present application are illustrated by taking the control device for the heat pump system as an example.

It should be appreciated that the heat pump system is a large device system composed of multiple heat pumps. For example, in large shopping malls, hospitals, schools and other engineering places with centralized water supply or heating needs, the heat pump system is composed of multiple heat pump.

It is to be noted that the historical level is used to represent the quantity of heat pumps that were in operation in the previous period of the current period, and the candidate level is used to represent the quantity of heat pumps that are to be in operation in the current period.

The control device for the heat pump system performs a calculation based on the obtained water temperature parameter set and a preset system requirement formula to obtain the system requirement value of the current period, calls a preset level model to perform level prediction based on the system requirement value to obtain the candidate level, and obtains the historical level of the previous period.

102, comparing the candidate level with the historical level to obtain a target level.

The control device for the heat pump system compares the candidate level with the historical level to determine that a trend of increasing levels or a trend of decreasing levels occurs in the current period. For example, in a case that the candidate level is greater than the historical level, it is determined that a trend of increasing levels occurs in the current period. In a case that the candidate level is less than the historical level, it is determined that a trend of decreasing levels occurs in the current period.

It is to be noted that the target level is used to represent the total quantity of heat pumps to be in operation in the heat pump system.

103, controlling one or more heat pumps in the heat pump system to be turned on or off based on the target level.

The control device for the heat pump system compares the obtained quantity of candidate heat pumps with the target level to determine the corresponding quantity of heat pumps that need to be turned on or off in the heat pump system of the current period, and controls the corresponding heat pumps to be turned on or off.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that a total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

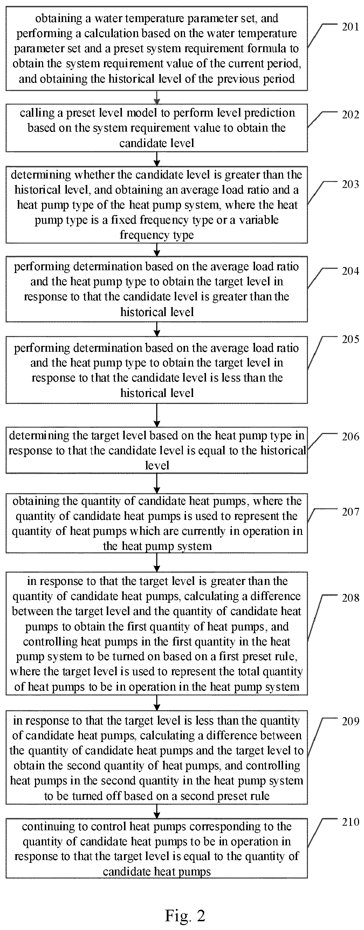

Please refer to Fig. 2, another embodiment of the control method for the heat pump system according to the embodiments of the present application includes following steps.

201, obtaining a water temperature parameter set, and performing a calculation based on the water temperature parameter set and a preset system requirement formula to obtain the system requirement value of the current period, and obtaining the historical level of the previous period.

The water temperature parameter set includes a current water temperature of the current period, a target water temperature of the current period, and a temperature difference of the previous period.

The preset system requirement formula is PIDsum=kp*Erro+I+kd*(Erro-Erro'), where PIDsum is used to represent the system requirement value, I is used to represent a periodic accumulated integral value of the temperature difference, I=I'+ki*Erro, kp, kd and ki are each a constant, an initial value of I' is 0, I' is used to represent the I obtained in the previous period. A specific value of the period may be set according to actual application scenarios. By way of non-limiting examples, the period may be 1 minute or 2 minutes. Erro' represents Erro of the previous period. A specific value of kp may be set according to actual application scenarios. By way of non-limiting examples, a value of kp may be 3, i.e., kp=3, or it may be 4, i.e., kp=4. A specific value of ki may be set according to actual application scenarios. By way of non-limiting examples, a value of ki may be 0.5, i.e., ki=0.5, or it may be 0.6, i.e., ki=0.6. A specific value of kd may be set according to actual application scenarios. By way of non-limiting examples, a value of kd may be 6, i.e., kd=6, or it may be 7, i.e., kd=7.

Erro is used to represent a temperature difference between a current water temperature and a target water temperature. It is to be noted that when the heat pump system uses an average inlet water temperature for control, that is, when the heat pump system uses the average inlet water temperature for calculation, the current water temperature is used to represent a current average inlet water temperature of the heat pump system, and the target water temperature is used to represent a target inlet water temperature of the heat pump system, i.e., the total water supply temperature, where the average inlet water temperature is an average value of inlet water temperatures of all heat pumps in the heat pump system. When the heat pump system uses the average outlet water temperature for control, that is, when the average outlet water temperature is used for calculation, the current water temperature is used to represent an current average outlet water temperature of the heat pump system, and the target water temperature is used to represent a target outlet water temperature of the heat pump system, i.e., the total water supply temperature, where the average outlet water temperature is an average value of outlet water temperatures of all heat pumps in the heat pump system. When the heat pump system uses an inlet water temperature of a water tank for control, i.e., when the heat pump system uses the inlet water temperature of the water tank for calculation, the current water temperature is used to represent an inlet water temperature of the water tank, and the target water temperature is used to represent a target inlet water temperature of the water tank. When the heat pump system uses an outlet water temperature of the water tank for control, i.e., when the heat pump system uses the outlet water temperature of the water tank for calculation, the current water temperature is used to represent the outlet water temperature of the water tank, and the target water temperature is used to represent a target outlet water temperature of the water tank. The inlet water temperature and the outlet water temperature of the water tank may be an inlet water temperature and outlet water temperature of a bushing in the water tank, or an inlet water temperature and outlet water temperature of a main pipe, the main pipe is a converging bushing of all bushings, that is, the water in all bushings is converged into the main pipe. The present application is not limited thereto.

For example, the control device for the heat pump system obtains the water temperature parameter set, which includes the current water temperature and target water temperature of the current period and the temperature difference of the previous period, performs the calculation based on the water temperature parameter set and the preset system requirement formula PIDsum=kp*Erro+I+kd* (Erro-Erro') to obtain that the system requirement value of the current period is 5, and obtains the historical level of the previous period.

202, calling a preset level model to perform level prediction based on the system requirement value to obtain the candidate level.

A specific preset level model may be set according to actual application scenarios. By way of non-limiting examples, the preset level model may be a decision tree model or a random forest model.

For example, the preset level model is the decision tree model. Based on the system requirement value, the control device for the heat pump system calls the decision tree model to perform classification prediction, that is, level prediction. The decision tree model includes multiple preset numerical ranges, i.e.: a first preset numerical range, a second preset numerical range, ..., an Nth preset numerical range, each preset numerical range corresponds to a preset level, that is, the first preset numerical range corresponds to a first preset level, the quantity of heat pumps corresponding to the first preset level is 1, the second preset numerical range corresponds to the second preset level, the quantity of heat pumps corresponding to the second preset level is 2, and so on, which will not be reiterated herein. It should be appreciated that the quantity of heat pumps corresponding to the Nth preset numerical range is the quantity of all heat pumps in the heat pump system. The multiple preset numerical ranges may be set according to actual application scenarios. By way of non-limiting examples, the first preset numerical range is 0<PIDsum<10, the second preset numerical interval is 10≤PIDsum<20, the third preset numerical interval is 20≤PIDsum<30, and so on, which will not be reiterated herein. In a case that the system requirement value of the current period is: PIDsum=5, the control device of the heat pump system matches the system requirement value with multiple preset numerical ranges of the decision tree model to obtain the first preset numerical range corresponding to the system requirement value. Next, the first preset level corresponding to the first preset numerical range is determined as the candidate level, where the quantity of heat pumps corresponding to the first preset level is 1, that is, the corresponding quantity of heat pumps that are to be in operation in the current cycle is 1.

203, determining whether the candidate level is greater than the historical level, and obtaining an average load ratio and a heat pump type of the heat pump system, where the heat pump type is a fixed frequency type or a variable frequency type.

The control device for the heat pump system determines whether the candidate level is greater than the historical level, to determine that a trend of increasing levels or a trend of decreasing levels occurs in the current period, and obtains the average load ratio and the heat pump type of the heat pump system.

The control device for the heat pump system obtains operation load ratios transmitted from all heat pumps that can communicate normally, are turned on and have an operation load ratio that is not 0%, and performs average processing to obtain the average load ratio of the heat pump system. It should be appreciated that, in a case that the quantity of heat pumps that are in operation in the heat pump system is 0, the average load ratio of the heat pump system is 0%.

For a variable frequency heat pump of the variable frequency type, the operation load ratio of the variable frequency heat pump is a ratio of a current operation frequency to a current maximum operation frequency, or a ratio of a current operation PID level to a current maximum PID level, where the current operation PID level is used to represent the quantity of variable frequency heat pumps that are in operation, and the current maximum PID level is used to represent the total quantity of all current variable frequency heat pumps in the heat pump system. For example, the current operation frequency is 40Hz and the current maximum operation frequency is 80Hz, the operation load ratio is 50%. In a case that the current maximum operation frequency of the variable frequency heat pump is 0Hz, the operation load ratio is 100%.

For a fixed-frequency heat pump of the fixed-frequency type, the operation load ratio of the fixed-frequency heat pump is a ratio of the quantity of compressors that are currently in operation in the fixed-frequency heat pump to the total quantity of compressors. For example, in a case that there are 4 compressors in the fixed frequency heat pump, when one compressor is turned on, the operation load ratio of the fixed frequency heat pump is 25%.

204, performing determination based on the average load ratio and the heat pump type to obtain the target level in response to that the candidate level is greater than the historical level.

It should be appreciated that when the candidate level is greater than the historical level, it means that a trend of increasing levels occurs in the current period. In response to that the trend of increasing levels occurs in the current period, the control device for the heat pump system performs further determination based on the average load ratio and heat pump type, so as to determine the target level.

205, performing determination based on the average load ratio and the heat pump type to obtain the target level in response to that the candidate level is less than the historical level.

It should be appreciated that when the candidate level is less than the historical level, it means that a trend of decreasing levels occurs in the current period. In response to that the trend of decreasing levels occurs in the current period, the control device for the heat pump system performs further determination based on the average load ratio and heat pump type, so as to determine the target level.

206, determining the target level based on the heat pump type in response to that the candidate level is equal to the historical level.

It should be appreciated that when the candidate level is equal to the historical level, it means that the level in the current period is not changed. In response to that the level in the current period is not changed, the control device for the heat pump system performs further determination based on heat pump type, so as to determine the target level.

207, obtaining the quantity of candidate heat pumps, where the quantity of candidate heat pumps is used to represent the quantity of heat pumps which are currently in operation in the heat pump system.

For example, the control device for the heat pump system obtains the quantity of candidate heat pumps, and the quantity of candidate heat pumps is 2, it means that there are 2 heat pumps are in operation in the heat pump system.

208, in response to that the target level is greater than the quantity of candidate heat pumps, calculating a difference between the target level and the quantity of candidate heat pumps to obtain the first quantity of heat pumps, and controlling heat pumps in the first quantity in the heat pump system to be turned on based on a first preset rule, where the target level is used to represent the total quantity of heat pumps to be in operation in the heat pump system.

The first preset rule is used to indicate that all heat pumps that are not currently in operation in the heat pump system are sorted according to an order from short usage time to long usage time to obtain the first quantity of heat pumps.

For example, on the basis of the example at step 207, the quantity of candidate heat pumps is 2, in a case that the total quantity of heat pumps that are to be in operation in the heat pump system is 3, that is, the target level is greater than the quantity of candidate heat pumps, the control device for the heat pump system calculates the difference between the target level and the quantity of candidate heat pumps to obtain that the first quantity of heat pumps is 1, and controls a first heat pump corresponding to the first quantity of heat pumps in the heat pump system to be turned on based on the first preset rule. In a case that the total quantity of heat pumps that are to be in operation in the heat pump system is 4, the control device for the heat pump system calculates the difference between the target level and the quantity of candidate heat pumps to obtain that the first quantity of heat pumps is 2, and controls a first heat pump and a second heat pump corresponding to the first quantity of heat pumps in the heat pump system to be turned on based on the first preset rule.

209, in response to that the target level is less than the quantity of candidate heat pumps, calculating a difference between the quantity of candidate heat pumps and the target level to obtain the second quantity of heat pumps, and controlling heat pumps in the second quantity in the heat pump system to be turned off based on a second preset rule.

The second preset rule is used to indicate that all heat pumps that are not currently in operation in the heat pump system are sorted according to an order from long usage time to short usage time to obtain the second quantity of heat pumps.

For example, the quantity of candidate heat pumps is 3, in a case that the total quantity of heat pumps that are to be in operation in the heat pump system is 3, that is, the target level is less than the quantity of candidate heat pumps, the control device for the heat pump system calculates the difference between the quantity of candidate heat pumps and the target level to obtain that the first quantity of heat pumps is 1, and controls a first heat pump corresponding to the second quantity of heat pumps in the heat pump system to be turned off based on the second preset rule. In a case that the total quantity of heat pumps that are to be in operation in the heat pump system is 1, the control device for the heat pump system calculates the difference between the quantity of candidate heat pumps and the target level to obtain that the first quantity of heat pumps is 2, and controls a first heat pump and a second heat pump corresponding to the second quantity of heat pumps in the heat pump system to be turned off based on the second preset rule.

210, continuing to control heat pumps corresponding to the quantity of candidate heat pumps to be in operation in response to that the target level is equal to the quantity of candidate heat pumps.

For example, in a case that the total quantity of heat pumps that are to be in operation in the heat pump system is the same as the quantity of heat pumps that are currently in operation in the heat pump system, the control device for the heat pump system continues to control the heat pumps corresponding to the quantity of candidate heat pumps to be in operation. That is, the target level of the current period is equal to the historical level of the previous period, where I=I', I is used to represent I of the current period, I' is used to represent I obtained in the previous period. When I=I', it is able to prevent I=I'+ki*Erro from accumulating in the current period in a case that the level of the current period is not changed, thereby to prevent the calculation of the system requirement value in the next period from being adversely affected.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that a total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

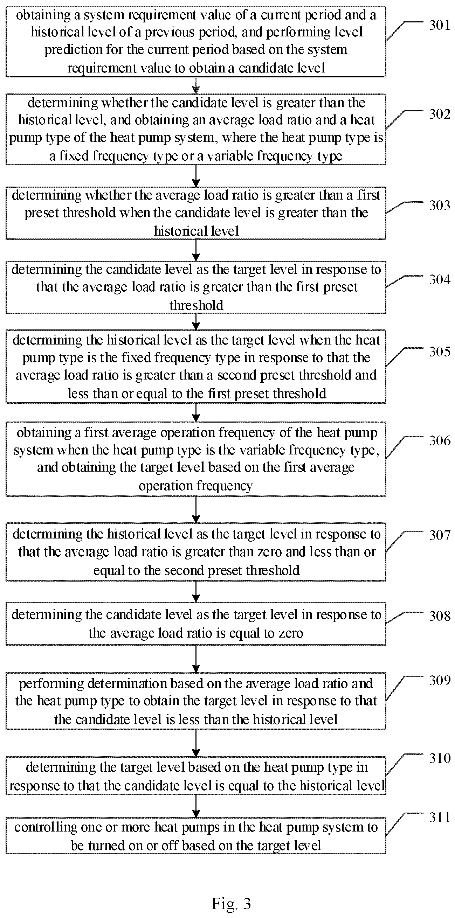

Please refer to Fig. 3, yet another embodiment of the control method for the heat pump system according to the embodiments of the present application includes following steps.

301, obtaining a system requirement value of a current period and a historical level of a previous period, and performing level prediction for the current period based on the system requirement value to obtain a candidate level.

The process executed at step 301 is the same as step 101, which will not be reiterated herein.

302, determining whether the candidate level is greater than the historical level, and obtaining an average load ratio and a heat pump type of the heat pump system, where the heat pump type is a fixed frequency type or a variable frequency type.

The process executed at step 302 is the same as step 203, which will not be reiterated herein.

302, determining whether the average load ratio is greater than a first preset threshold when the candidate level is greater than the historical level.

A value of the first preset threshold may be set according to actual application scenarios. By way of non-limiting examples, the first preset threshold may be 80% or 85%. For example, the first preset threshold is 80%, the control device for the heat pump system determines whether the average load ratio is greater than 80%.

304, determining the candidate level as the target level in response to that the average load ratio is greater than the first preset threshold.

For example, on the basis of the example at step 303, the first preset threshold is 80%. As can be appreciated, the average load ratio is greater than the first preset threshold, it indicates that the average load of the heat pump system is relatively large and it needs to add the heat pump for operation, i.e., the candidate level is determined as the target level. On the one hand, it is able to reduce the overall energy consumption of the heat pump system. On the other hand, it is able to address the issue that the service life of the heat pump in the heat pump system is significantly shortened due to a long-term operation under high load.

305, determining the historical level as the target level when the heat pump type is the fixed frequency type in response to that the average load ratio is greater than a second preset threshold and less than or equal to the first preset threshold.

A specific value of the second preset threshold may be set according to actual application scenarios. By way of non-limiting examples, the second preset threshold may be 40% or 45%.

For example, on the basis of the example at step 303, the first preset threshold is 80%, the second preset threshold is 40%, in a case that the average load ratio is greater than 40% and less than or equal to 80%, and the heat pump type is the fixed frequency type, the control device for the heat pump system determines the historical level as the target level, where I=I'. An average load ratio of a heat pump system composed of fixed-frequency heat pumps is close to 50%, i.e., the energy efficiency of the heat pump system is not high, in a case that the candidate level is determined as the target level, the energy efficiency of the heat pump system may be reduced. When the average load ratio is 100%, the candidate level can be determined as the target level. The reason is that a fan speed and a flow capacity of a water pump of the fixed-frequency heat pump correspond to the evaporation capability and condensation capability respectively. The fan speed or the flow capacity of the water pump matches a capability determined after all fixed-frequency heat pumps are started. When all the fixed-frequency heat pumps are not started, redundant capabilities occurs for the fan or water pump, which causes a waste of electrical energy.

306, obtaining a first average operation frequency of the heat pump system when the heat pump type is the variable frequency type, and obtaining the target level based on the first average operation frequency.

To be specific, (1) when the heat pump type is the variable frequency type, the control device for the heat pump system obtains a first average operation frequency of the heat pump system, (2) in response to that the first average operation frequency is greater than or equal to a first preset frequency value, the control device for the heat pump system determines the candidate level as the target level, (3) in response to that the first average operation frequency is less than the first preset frequency value, the control device for the heat pump system determines the historical level as the target level.

The first average operation frequency is an average operation frequency obtained by averaging operation frequencies of all variable frequency heat pumps currently in operation in the heat pump system.

A specific value of the first preset frequency value may be set according to actual application scenarios. By way of non-limiting examples, the first preset frequency value may be 50Hz or 60 Hz. For example, the first preset frequency value is the maximum frequency value in the target operation frequency range, where the variable frequency heat pump has a relatively high Coefficient Of Performance (COP) in the target operation frequency range. The COP is not only used to represent single cooling COP or single heating COP, but also used to represent cooling and heating COP.

For example, when the heat pump type is the variable frequency type, the control device for the heat pump system obtains a first average operation frequency of the heat pump system. In response to that the first average operation frequency is greater than or equal to the first preset frequency value, the control device for the heat pump system determines the candidate level as the target level. That is, when the first average operation frequency is greater than or equal to the first preset frequency value, the energy efficiency of the heat pump system is relatively low, it needs to add more heat pumps for operation, so as to enable the first average operation frequency to be close to the maximum frequency value, thereby improving the energy efficiency of the heat pump system and improving the water heating efficiency of the heat pump system. In the case that the first average operation frequency is less than the first preset frequency value, the control device for the heat pump system determines the historical level as the target level, where I=I'. That is, the first average operation frequency is still within a target operation frequency range, and the energy efficiency of the heat pump system is relatively high, it does not need to add a heat pump for operation.

307, determining the historical level as the target level in response to that the average load ratio is greater than zero and less than or equal to the second preset threshold.

For example, on the basis of the example at step 303, the second preset threshold is 40%. In a case that the average load ratio is greater than zero and less than or equal to 40%, the historical level is determined as the target level, where I=I'. That is, the average load of the heat pump system is relatively small, and it does not need to add a heat pump for operation. Since it takes a process from startup of the heat pump to an increasing load ratio of the heat pump, the relatively small average load ratio may be because the heat pump system is still in an early stage of startup. Therefore, the historical level is determined as the target level, it is able to avoid that the energy efficiency of the heat pump system is reduced due to prematurely increasing the heat pumps.

308, determining the candidate level as the target level in response to the average load ratio is equal to zero.

As can be appreciated, when the average load ratio is equal to zero, it indicates that the heat pumps in the heat pump system are turned off due to failure and thereby it needs to increase heat pumps for operation, that is, the candidate level is determined as the target level.

309, performing determination based on the average load ratio and the heat pump type to obtain the target level in response to that the candidate level is less than the historical level.

The process executed at step 309 is the same as step 205, which will not be reiterated herein.

310, determining the target level based on the heat pump type in response to that the candidate level is equal to the historical level.

The process executed at step 310 is the same as step 206, which will not be reiterated herein.

311, controlling one or more heat pumps in the heat pump system to be turned on or off based on the target level.

The process executed at step 311 is the same as step 103, which will not be reiterated herein.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that the total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

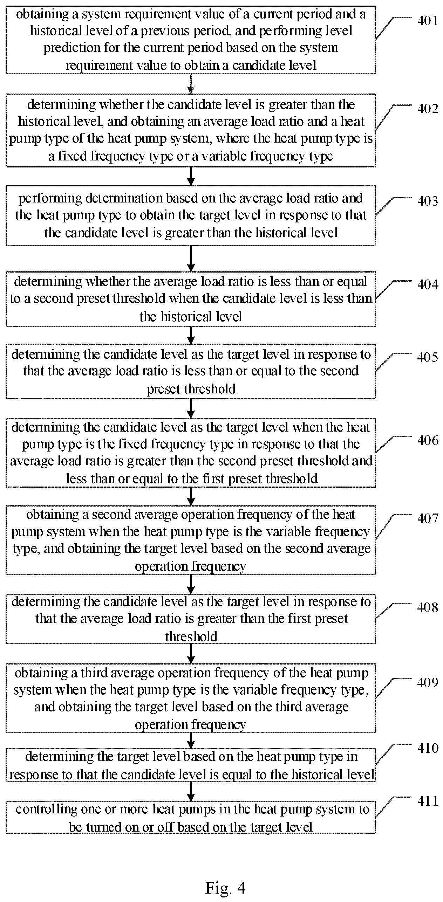

Please refer to Fig. 4, still yet another embodiment of the control method for the heat pump system according to the embodiments of the present application includes following steps.

401, obtaining a system requirement value of a current period and a historical level of a previous period, and performing level prediction for the current period based on the system requirement value to obtain a candidate level.

The process executed at step 401 is the same as step 101, which will not be reiterated herein.

402, determining whether the candidate level is greater than the historical level, and obtaining an average load ratio and a heat pump type of the heat pump system, where the heat pump type is a fixed frequency type or a variable frequency type.

The process executed at step 402 is the same as step 203, which will not be reiterated herein.

403, performing determination based on the average load ratio and the heat pump type to obtain the target level in response to that the candidate level is greater than the historical level.

The process executed at step 403 is the same as step 204, which will not be reiterated herein.

404, determining whether the average load ratio is less than or equal to a second preset threshold when the candidate level is less than the historical level.

A specific value of the second preset threshold may be set according to actual application scenarios. By way of non-limiting examples, the second preset threshold may be 40% or 45%.

405, determining the candidate level as the target level in response to that the average load ratio is less than or equal to the second preset threshold.

For example, the second preset threshold is 40%. In a case that the average load ratio is less than or equal to 40%, the control device for the heat pump system determines the candidate level as the target level. That is, the average load of the heat pump system is relatively small, and heat pumps that are currently in operation need to be turned off. On the one hand, it is able to reduce the energy consumption of the heat pump system. On the other hand, it is able to address the issue that the service life of the heat pump in the heat pump system is significantly shortened due to maintaining a low load status.

406, determining the candidate level as the target level when the heat pump type is the fixed frequency type in response to that the average load ratio is greater than the second preset threshold and less than or equal to the first preset threshold.

For example, on the basis of the example at step 303, the first preset threshold is 80%, the second preset threshold is 40%, in a case that the average load ratio is greater than 40% and less than or equal to 80%, and the heat pump type is the fixed frequency type, the control device for the heat pump system determines the candidate level as the target level. An average load ratio of a heat pump system composed of fixed-frequency heat pumps is close to 50%, i.e., the energy efficiency of the heat pump system is not high, it needs to turn off heat pumps that are currently in operation, so as to improve the energy efficiency of the heat pump system.

407, obtaining a second average operation frequency of the heat pump system when the heat pump type is the variable frequency type, and obtaining the target level based on the second average operation frequency.

The second average operation frequency is an average operation frequency obtained by averaging operating frequencies of all variable frequency heat pumps currently in operation in the heat pump system.

When the heat pump type is the variable frequency type, the control device for the heat pump system obtains a second average operation frequency of the heat pump system, and performs further determination based on the second average operation frequency, so as to determine the target level.

408, determining the candidate level as the target level in response to that the average load ratio is greater than the first preset threshold.

For a fixed-frequency heat pump of the fixed-frequency type, the operation load ratio of the fixed-frequency heat pump is a ratio of the quantity of compressors that are currently in operation in the fixed-frequency heat pump to the total quantity of compressors. For example, in a case that there are 4 compressors in the fixed frequency heat pump, when one compressor is turned on, the operation load ratio of the fixed frequency heat pump is 25%.

For example, on the basis of the example at step 303, the first preset threshold is 80%, in a case that the average load ratio is greater than 80%, and the heat pump type is the fixed frequency type, the control device for the heat pump system determines the candidate level as the target level. That is, the quantity of fixed-frequency heat pumps is reduced, thereby improving the energy efficiency of the heat pump system.

For another example, in a case that the heat pump system is a fixed frequency heat pump with a single compressor, that is, when the fixed-frequency heat pump is turned on, the average load ratio of the heat pump system is 100%. The average load ratio is greater than 80%, so it needs to turn off the single fixed-frequency heat pump, thereby to prevent the single fixed-frequency heat pump from being in operation all the time.

409, obtaining a third average operation frequency of the heat pump system when the heat pump type is the variable frequency type, and obtaining the target level based on the third average operation frequency.

The third average operation frequency is an average operation frequency obtained by averaging operating frequencies of all variable frequency heat pumps currently in operation in the heat pump system.

When the heat pump type is the variable frequency type, the control device for the heat pump system obtains a third average operation frequency of the heat pump system, and performs further determination based on the third average operation frequency, so as to determine the target level.

410, determining the target level based on the heat pump type in response to that the candidate level is equal to the historical level.

The process executed at step 410 is the same as step 206, which will not be reiterated herein.

411, controlling one or more heat pumps in the heat pump system to be turned on or off based on the target level.

The process executed at step 411 is the same as step 103, which will not be reiterated herein.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that the total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

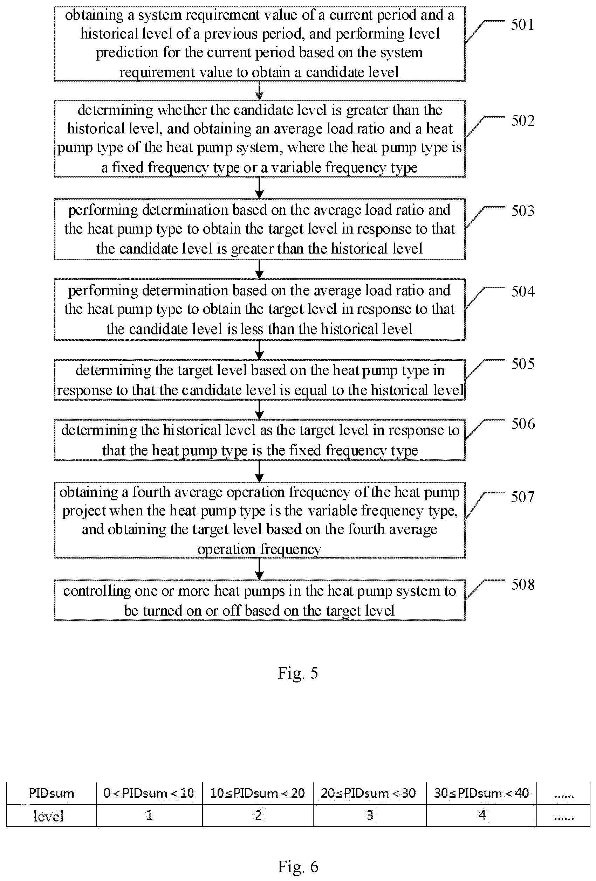

Please refer to Fig. 5, still yet another embodiment of the control method for the heat pump system according to the embodiments of the present application includes following steps.

501, obtaining a system requirement value of a current period and a historical level of a previous period, and performing level prediction for the current period based on the system requirement value to obtain a candidate level.

The process executed at step 501 is the same as step 101, which will not be described again herein.

502, determining whether the candidate level is greater than the historical level, and obtaining an average load ratio and a heat pump type of the heat pump system, where the heat pump type is a fixed frequency type or a variable frequency type.

The process executed at step 502 is the same as step 203, which will not be reiterated herein.

503, performing determination based on the average load ratio and the heat pump type to obtain the target level in response to that the candidate level is greater than the historical level.

The process executed at step 503 is the same as step 204, which will not be reiterated herein.

504, performing determination based on the average load ratio and the heat pump type to obtain the target level in response to that the candidate level is less than the historical level.

The process executed at step 504 is the same as step 205, which will not be reiterated herein.

505, determining the target level based on the heat pump type in response to that the candidate level is equal to the historical level.

It should be appreciated that when the candidate level is equal to the historical level, it means that the level in the current period is not changed, the control device for the heat pump system performs further determination based on heat pump type, so as to determine the target level.

506, determining the historical level as the target level in response to that the heat pump type is the fixed frequency type.

When the heat pump type is the fixed frequency type, the control device for the heat pump system determines the historical level as the target level, i.e., maintaining the quantity of heat pumps that are currently in operation in the heat pump system.

507, obtaining a fourth average operation frequency of the heat pump project when the heat pump type is the variable frequency type, and obtaining the target level based on the fourth average operation frequency.

To be specific, (1) when the heat pump type is the variable frequency type, the control device for the heat pump system obtains a fourth average operation frequency of the heat pump system, (2) in response to that the fourth average operation frequency is less than or equal to a first preset frequency value and greater than a second preset frequency value, the control device for the heat pump system determines the historical level as the target level, (3) in response to that the fourth average operation frequency is less than the second preset frequency value, the control device for the heat pump system reduces the candidate level by one level to obtain the target level, (4) in response to that the fourth average operating frequency is greater than the first preset frequency value, the control device for the heat pump system increases the candidate level by one level to obtain the target level.

The fourth average operation frequency is an average operation frequency obtained by averaging operating frequencies of all variable frequency heat pumps currently in operation in the heat pump system.

A specific value of the second preset frequency value may be set according to actual application scenarios. By way of non-limiting examples, the second preset frequency value may be 30Hz or 40 Hz. For example, the second preset frequency value is the minimum frequency value in the target operation frequency range, where the variable frequency heat pump has a relatively high Coefficient Of Performance (COP) in the target operation frequency range. The COP is not only used to represent single cooling COP or single heating COP, but also used to represent cooling and heating COP.

For example, when the heat pump type is the variable frequency type, the control device for the heat pump system obtains a fourth average operation frequency of the heat pump system. In response to that the fourth average operation frequency is less than or equal to the first preset frequency value and greater than the second preset frequency value, the control device for the heat pump system determines the historical level as the target level. That is, the fourth average operation frequency is still within a target operation frequency range, and the energy efficiency of the heat pump system is relatively high, it does not need to add a heat pump for operation. In a case that the fourth average operation frequency is less than the second preset frequency value, the control device for the heat pump system reduces the candidate level by one level to obtain the target level, and subtracts a preset value from I of the current period. On the basis of the example at step 202, the preset value is a difference between the maximum values in the preset numerical ranges. By way of non-limiting examples, as shown in the PID level matching table in Fig. 6, the first preset numerical range is 0<PIDsum<10, and the second preset numerical range is 10≤PIDsum<20, so the preset value is 10. That is, the fourth average operation frequency is less than the minimum frequency value, the energy efficiency of the heat pump system is low, it needs to reduce the candidate level by one level, so as to enable the fourth average operation frequency to be close to the minimum frequency value, thereby improving the energy efficiency of the heat pump system and improving the water heating efficiency of the heat pump system.

In a case that the fourth average operating frequency is greater than the first preset frequency value, the control device for the heat pump system increases the candidate level by one level to obtain the target level, and add the preset value to I of the current period. On the basis of the example at step 202, the preset value is a difference between the maximum values in the preset numerical ranges. For example, the first preset numerical range is 0<PIDsum<10, and the second preset numerical range is 10≤PIDsum<20, so the preset value is 10. On the basis of the example at step 306, the fourth average operation frequency is greater than the maximum frequency value, the energy efficiency of the heat pump system is low, it needs to increase the candidate level by one level, so as to enable the fourth average operation frequency to be close to the maximum frequency value, thereby improving the energy efficiency of the heat pump system and improving the water heating efficiency of the heat pump system.

508, controlling one or more heat pumps in the heat pump system to be turned on or off based on the target level.

The process executed at step 508 is the same as step 103, which will not be reiterated herein.

In a possible implementation, obtaining the second average operation frequency of the heat pump system when the heat pump type is the variable frequency type and obtaining the target level based on the second average operation frequency specifically includes that: (1) the control device for the heat pump system obtains the second average operation frequency of the heat pump system when the heat pump type is the variable frequency type, (2) the control device for the heat pump system determines the candidate level as the target level in response to that the second average operation frequency is less than or equal to a second preset frequency value, (3) the control device for the heat pump system determines the historical level as the target level in response to that the second average operation frequency is greater than the second preset frequency value.

For example, on the basis of the example at step 507, when the heat pump type is the variable frequency type, the control device for the heat pump system obtains the second average operation frequency of the heat pump system. In response to that the second average operation frequency is less than or equal to the second preset frequency value, the control device for the heat pump system determines the candidate level as the target level. That is, when the second average operation frequency is less than the minimum frequency value, the energy efficiency of the heat pump system is low, it needs to turn off heat pumps that are currently in operation, so as to enable the second average operation frequency to be close to the minimum frequency value, thereby improving the energy efficiency of the heat pump system and improving the water heating efficiency of the heat pump system. In the case that the second average operation frequency is greater than the second preset frequency value, the control device for the heat pump system determines the historical level as the target level, where I=I'. That is, the second average operation frequency is still within a target operation frequency range, and the energy efficiency of the heat pump system is relatively high, so it does not need to add a heat pump for operation.

In a possible implementation, obtaining the third average operation frequency of the heat pump system when the heat pump type is the variable frequency type and obtaining the target level based on the third average operation frequency specifically includes that: (1) the control device for the heat pump system obtains the third average operation frequency of the heat pump system when the heat pump type is the variable frequency type, (2) the control device for the heat pump system determines the candidate level as the target level in response to that the third average operation frequency is less than or equal to a second preset frequency value, (3) the control device for the heat pump system determines the historical level as the target level in response to that the third average operation frequency is greater than the second preset frequency value.

For example, on the basis of the example at step 507, when the heat pump type is the variable frequency type, the control device for the heat pump system obtains the third average operation frequency of the heat pump system. In response to that the third average operation frequency is less than or equal to the second preset frequency value, the control device for the heat pump system determines the candidate level as the target level. That is, when the third average operation frequency is less than the minimum frequency value, the energy efficiency of the heat pump system is low, it needs to turn off heat pumps that are currently in operation, so as to enable the third average operation frequency to be close to the minimum frequency value, thereby improving the energy efficiency of the heat pump system and improving the water heating efficiency of the heat pump system. In the case that the third average operation frequency is greater than the second preset frequency value, the control device for the heat pump system determines the historical level as the target level, where I=I'. That is, the third average operation frequency is still within a target operation frequency range, and the energy efficiency of the heat pump system is relatively high, so it does not need to add a heat pump for operation.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that a total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

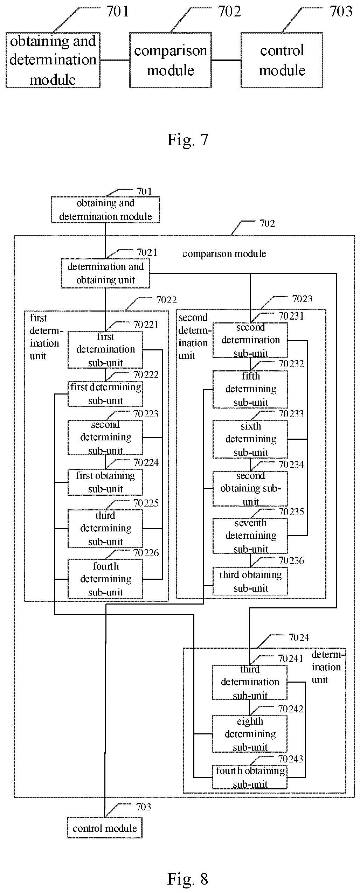

The control method for the heat pump system in the embodiments of the present application is described above, and a control apparatus for the heat pump system in the embodiments of the present application is described below. Please refer to Fig. 7, an embodiment of the control apparatus for the heat pump system in the embodiments of the present application includes:
an obtaining and determination module 701, configured to obtain a system requirement value of a current period and a historical level of a previous period, and perform level prediction for the current period based on the system requirement value to obtain a candidate level;
a comparison module 702, configured to compare the candidate level with the historical level to obtain a target level;
a control module 703, configured to control one or more heat pumps in the heat pump system to be turned on or off based on the target level.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that a total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

Please refer to Fig. 8, another embodiment of the control apparatus for the heat pump system in the embodiments of the present application includes:
an obtaining and determination module 701, configured to obtain a system requirement value of a current period and a historical level of a previous period, and perform level prediction for the current period based on the system requirement value to obtain a candidate level;
a comparison module 702, configured to compare the candidate level with the historical level to obtain a target level;
a control module 703, configured to control one or more heat pumps in the heat pump system to be turned on or off based on the target level.

Optionally, the comparison module 702 includes:
a determination and obtaining unit 7021, configured to determine whether the candidate level is greater than the historical level, and obtain an average load ratio and a heat pump type of the heat pump system, where the heat pump type is a fixed frequency type or a variable frequency type;
a first determination unit 7022, configured to perform determination based on the average load ratio and the heat pump type to obtain the target level in response to that the candidate level is greater than the historical level;
a second determination unit 7023, configured to perform determination based on the average load ratio and the heat pump type to obtain the target level in response to that the candidate level is less than the historical level; and
a determination unit 7024, configured to determine the target level based on the heat pump type in response to that the candidate level is equal to the historical level.

Optionally, the first determination unit 7022 includes:
a first determination sub-unit 70221, configured to determine whether the average load ratio is greater than a first preset threshold when the candidate level is greater than the historical level;
a first determining sub-unit 70222, configured to determine the candidate level as the target level in response to that the average load ratio is greater than the first preset threshold;
a second determining sub-unit 70223, configured to determine the historical level as the target level when the heat pump type is the fixed frequency type in response to that the average load ratio is greater than a second preset threshold and less than or equal to the first preset threshold;
a first obtaining sub-unit 70224, configured to obtain a first average operation frequency of the heat pump system when the heat pump type is the variable frequency type, and obtain the target level based on the first average operation frequency;
a third determining sub-unit 70225, configured to determine the historical level as the target level in response to that the average load ratio is greater than zero and less than or equal to the second preset threshold; and
a fourth determining sub-unit 70226, configured to determine the candidate level as the target level in response to the average load ratio is equal to zero.

Optionally, the first obtaining sub-unit 70224 is specifically configured to:
obtain the first average operation frequency of the heat pump system when the heat pump type is the variable frequency type;
determine the candidate level as the target level in response to that the first average operation frequency is greater than or equal to a first preset frequency value; and
determine the historical level as the target level in response to that the first average operation frequency is less than the first preset frequency value.

Optionally, the second determination unit 7023 includes:
a second determination sub-unit 70231, configured to determine whether the average load ratio is less than or equal to a second preset threshold when the candidate level is less than the historical level;
a fifth determining sub-unit 70232, configured to determine the candidate level as the target level in response to that the average load ratio is less than or equal to the second preset threshold;
a sixth determining sub-unit 70233, configured to determine the candidate level as the target level when the heat pump type is the fixed frequency type in response to that the average load ratio is greater than the second preset threshold and less than or equal to the first preset threshold; and
a second obtaining sub-unit 70234, configured to obtain a second average operation frequency of the heat pump system when the heat pump type is the variable frequency type, and obtain the target level based on the second average operation frequency.

Optionally, the second obtaining sub-unit 70234 is specifically configured to:
obtain the second average operation frequency of the heat pump system when the heat pump type is the variable frequency type;
determine the candidate level as the target level in response to that the second average operation frequency is less than or equal to a second preset frequency value; and
determine the historical level as the target level in response to that the second average operation frequency is greater than the second preset frequency value.

Optionally, the second determination unit 7023 further includes:
a seventh determining sub-unit 70235, configured to determine the candidate level as the target level when the heat pump type is the fixed frequency type in response to that the average load ratio is greater than the first preset threshold; and
a third obtaining sub-unit 70236, configured to obtain a third average operation frequency of the heat pump system when the heat pump type is the variable frequency type, and obtaining the target level based on the third average operation frequency.

Optionally, the third obtaining sub-unit 70236 is specifically configured to:
obtain the third average operation frequency of the heat pump system when the heat pump type is the variable frequency type;
determine the candidate level as the target level in response to that the third average operation frequency is less than or equal to a second preset frequency value; and
determine the historical level as the target level in response to that the third average operation frequency is greater than the second preset frequency value.

Optionally, the determination unit 7024 includes:
a third determination sub-unit 70241, configured to determine whether the heat pump type is the fixed frequency type when the candidate level is equal to the historical level;
an eighth determining sub-unit 70242, configured to determine the historical level as the target level in response to that the heat pump type is the fixed frequency type;
a fourth obtaining sub-unit 70243, configured to obtain a fourth average operation frequency of the heat pump project when the heat pump type is the variable frequency type, and obtaining the target level based on the fourth average operation frequency.

Optionally, the fourth obtaining sub-unit 70243 is specifically configured to:
obtain the fourth average operation frequency of the heat pump system when the heat pump type is the variable frequency type;
determine the candidate level as the target level in response to that the fourth average operating frequency is less than or equal to a first preset frequency value and greater than or equal to a second preset frequency value;
reduce the candidate level by one level to obtain the target level in response to that the fourth average operating frequency is less than the second preset frequency value; and
increase the candidate level by one level to obtain the target level in response to that the fourth average operating frequency is greater than the first preset frequency value.

Optionally, the control module 703 is specifically configured to:
obtain the quantity of candidate heat pumps, where the quantity of candidate heat pumps is used to represent the quantity of heat pumps which are currently in operation in the heat pump system;
in response to that the target level is greater than the quantity of candidate heat pumps, calculate a difference between the target level and the quantity of candidate heat pumps to obtain the first quantity of heat pumps, and control heat pumps in the first quantity in the heat pump system to be turned on based on a first preset rule, where the target level is used to represent the total quantity of heat pumps to be in operation in the heat pump system;
in response to that the target level is less than the quantity of candidate heat pumps, calculate a difference between the quantity of candidate heat pumps and the target level to obtain the second quantity of heat pumps, and control heat pumps in the second quantity in the heat pump system to be turned off based on a second preset rule;
continue to control heat pumps corresponding to the quantity of candidate heat pumps to be in operation in response to that the target level is equal to the quantity of candidate heat pumps.

Optionally, the obtaining and determination module 701 is specifically configured to:
obtain a water temperature parameter set, and performing a calculation based on the water temperature parameter set and a preset system requirement formula to obtain the system requirement value of the current period, and obtaining the historical level of the previous period;
call a preset level model to perform level prediction based on the system requirement value to obtain the candidate level.

In the embodiments of the present application, level prediction is performed based on the system requirement value of the current period to obtain the candidate level, the candidate level is compared with the historical level of the previous period to obtain the target level, and one or more heat pumps in the heat pump system are controlled to be turned on or off based on the target level, so as to address the issue that a total water supply temperature cannot be reached due to that when a water temperature is close to the total water supply temperature and most of the heat pumps have been turned off, improve a success rate of reaching the total water supply temperature, thereby improving the water heating efficiency of the heat pump system, and achieving the purpose of the heat pump system to work in the optimal energy efficiency range.

The control apparatus for the heat pump system in the embodiments of the present application is described above in detail with reference to Fig. 7 and Fig. 8 from the perspective of modular functional entities. A control device for the heat pump system in the embodiments of the present application will be described hereinafter from the perspective of hardware processing.

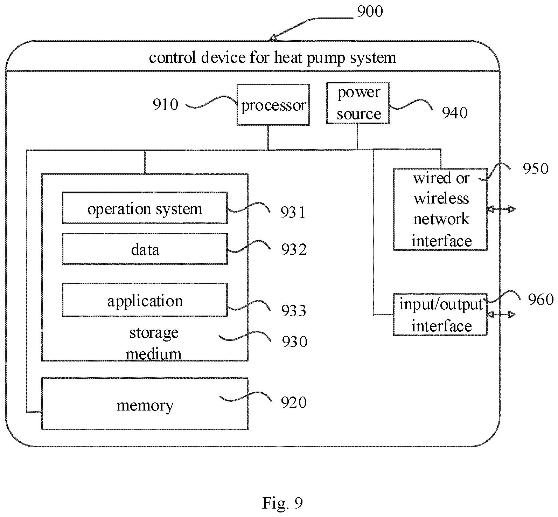

Fig. 9 is a schematic diagram of an embodiment of a control device for a heat pump system according to the embodiments of the present application. The control device 900 for the heat pump system may vary greatly due to different configurations or performance, and may include one or more central processing units (CPUs) 910 (for example, one or more processors) and a memory 920, one or more storage media 930 (e.g., one or more mass storage devices) storing applications 933 or data 932. The memory 920 and the storage medium 930 may be transitory storage or persistent storage. The program stored in the storage medium 930 may include one or more modules (not shown), and each module may include a series of instruction operations on the control device 900 for the heat pump system. Furthermore, the processor 910 may be configured to communicate with the storage medium 930 and execute a series of instruction operations in the storage medium 930 on the control device 900 for the heat pump system.

The control device 900 for the heat pump system may further include one or more power sources 940, one or more wired or wireless network interfaces 950, one or more input/output interfaces 960, and/or one or more operation systems 931, such as Windows Serve, Mac OS X, Unix, Linux, FreeBSD. As can be appreciated by a person skilled in the art, the structure of the control device for the heat pump system in Fig. 9 shall not be construed as limiting the control device for the heat pump, and it may include more or less members than those shown in Fig. 9, or a combination of some members, or a different arrangement of members.

The present application further provides a control device for a heat pump system, including a memory and a processor, where computer readable instructions are stored in the memory, the computer readable instructions, when executed by the processor, to cause the processor to implement the control method for the heat pump system in the above-mentioned embodiments.

The present application further provides a computer-readable storage medium, and the computer-readable storage medium is a non-transitory computer-readable storage medium or a transitory computer-readable storage medium, the computer-readable storage medium has stored thereon instructions, and the instructions, when executed by a computer, cause the computer to implement the control method for the heat pump system.

As can be clearly appreciated by a person skilled in the art, for the sake of convenience and conciseness, the specific operation processes of the systems, devices and units described above may refer to the corresponding processes in the foregoing method embodiments, which will not be reiterated herein.

In the case that the integrated units are implemented in the form of software functional units and sold or used as an independent product, they may be stored in a computer-readable storage medium. Based upon such understanding, the technical solutions of the present application essentially or the part thereof contributing to the prior art may be embodied in the form of a computer program product which may be stored in a storage medium and which includes several instructions to cause a computer device (which may be a personal computer, a server, or a network device, etc.) to perform all or some steps of the method according to the respective embodiments of the present application. The foregoing storage medium includes various media that may store program codes, such as a USB flash drive, a mobile hard disk, a ROM, a RAM, a magnetic disk, or an optical disk.

The above embodiments are only used to illustrate the technical solution of the present application, but shall not be construed as limiting the present application.

## Claims

1. A control method for a heat pump system with a plurality of heat pumps, **characterized by** comprising:
obtaining (101, 301, 401, 501) a system requirement value of a current period and a historical level of a previous period, and performing level prediction for the current period based on the system requirement value to obtain a candidate level; wherein the historical level is used to represent the quantity of heat pumps that were in operation in the previous period of the current period, and the candidate level is used to represent the quantity of heat pumps that are to be in operation in the current period;
comparing (102) the candidate level with the historical level to obtain a target level; wherein the target level is used to represent the total quantity of heat pumps to be in operation in the heat pump system; and
controlling (103) one or more heat pumps in the heat pump system to be turned on or off based on the target level.

2. The control method for the heat pump system according to claim 1, wherein comparing the candidate level with the historical level to obtain the target level, comprises:
determining (203, 302, 402, 502) whether the candidate level is greater than the historical level, and obtaining an average load ratio and a heat pump type of the heat pump system, wherein the heat pump type is a fixed frequency type or a variable frequency type;
performing (204, 403, 503) determination based on the average load ratio and the heat pump type to obtain the target level in response to that the candidate level is greater than the historical level;
performing (205, 404, 504) determination based on the average load ratio and the heat pump type to obtain the target level in response to that the candidate level is less than the historical level; and
determining (206, 310, 410) the target level based on the heat pump type in response to that the candidate level is equal to the historical level.

3. The control method for the heat pump system according to claim 2, wherein performing determination based on the average load ratio and the heat pump type to obtain the target level in response to that the candidate level is greater than the historical level, comprises:
determining (303) whether the average load ratio is greater than a first preset threshold when the candidate level is greater than the historical level;
determining (304) the candidate level as the target level in response to that the average load ratio is greater than the first preset threshold;
determining (305) the historical level as the target level when the heat pump type is the fixed frequency type in response to that the average load ratio is greater than a second preset threshold and less than or equal to the first preset threshold;
obtaining (306) a first average operation frequency of the heat pump system when the heat pump type is the variable frequency type, and obtaining the target level based on the first average operation frequency;
determining (307) the historical level as the target level in response to that the average load ratio is greater than zero and less than or equal to the second preset threshold; and
determining (308) the candidate level as the target level in response to the average load ratio is equal to zero.

4. The control method for the heat pump system according to claim 3, wherein obtaining the first average operation frequency of the heat pump system when the heat pump type is the variable frequency type and obtaining the target level based on the first average operation frequency, comprises:
obtaining the first average operation frequency of the heat pump system when the heat pump type is the variable frequency type;
determining the candidate level as the target level in response to that the first average operation frequency is greater than or equal to a first preset frequency value; and
determining the historical level as the target level in response to that the first average operation frequency is less than the first preset frequency value.

5. The control method for the heat pump system according to claim 2, wherein performing determination based on the average load ratio and the heat pump type to obtain the target level in response to that the candidate level is less than the historical level, comprises:
determining (404) whether the average load ratio is less than or equal to a second preset threshold when the candidate level is less than the historical level;
determining (405) the candidate level as the target level in response to that the average load ratio is less than or equal to the second preset threshold;
determining (406) the candidate level as the target level when the heat pump type is the fixed frequency type in response to that the average load ratio is greater than the second preset threshold and less than or equal to the first preset threshold; and
obtaining (407) a second average operation frequency of the heat pump system when the heat pump type is the variable frequency type, and obtaining the target level based on the second average operation frequency.

6. The control method for the heat pump system according to claim 5, wherein obtaining the second average operation frequency of the heat pump system when the heat pump type is the variable frequency type and obtaining the target level based on the second average operation frequency, comprises:
obtaining the second average operation frequency of the heat pump system when the heat pump type is the variable frequency type;
determining the candidate level as the target level in response to that the second average operation frequency is less than or equal to a second preset frequency value; and
determining the historical level as the target level in response to that the second average operation frequency is greater than the second preset frequency value.

7. The control method for the heat pump system according to claim 5, further comprising:
subsequent to determining whether the average load ratio is less than or equal to the second preset threshold when the candidate level is less than the historical level,
determining (408) the candidate level as the target level when the heat pump type is the fixed frequency type in response to that the average load ratio is greater than the first preset threshold; and
obtaining (409) a third average operation frequency of the heat pump system when the heat pump type is the variable frequency type, and obtaining the target level based on the third average operation frequency.

8. The control method for the heat pump system according to claim 7, wherein obtaining the third average operation frequency of the heat pump system when the heat pump type is the variable frequency type and obtaining the target level based on the third average operation frequency, comprises:
obtaining the third average operation frequency of the heat pump system when the heat pump type is the variable frequency type;
determining the candidate level as the target level in response to that the third average operation frequency is less than or equal to a second preset frequency value; and
determining the historical level as the target level in response to that the third average operation frequency is greater than the second preset frequency value.

9. The control method for the heat pump system according to claim 2, wherein determining the target level based on the heat pump type in response to that the candidate level is equal to the historical level, comprises:
determining (505) whether the heat pump type is the fixed frequency type when the candidate level is equal to the historical level;
determining (506) the historical level as the target level in response to that the heat pump type is the fixed frequency type;
obtaining (507) a fourth average operation frequency of the heat pump project when the heat pump type is the variable frequency type, and obtaining the target level based on the fourth average operation frequency.

10. The control method for the heat pump system according to claim 9, wherein obtaining the fourth average operation frequency of the heat pump project when the heat pump type is the variable frequency type and obtaining the target level based on the fourth average operation frequency, comprises:
obtaining the fourth average operation frequency of the heat pump system when the heat pump type is the variable frequency type;
determining the candidate level as the target level in response to that the fourth average operating frequency is less than or equal to a first preset frequency value and greater than or equal to a second preset frequency value;
reducing the candidate level by one level to obtain the target level in response to that the fourth average operating frequency is less than the second preset frequency value; and
increasing the candidate level by one level to obtain the target level in response to that the fourth average operating frequency is greater than the first preset frequency value.

11. The control method for the heat pump system according to any one of claims 1 to 10, wherein controlling one or more heat pumps in the heat pump system to be turned on or off based on the target level, comprises:
obtaining (207) the quantity of candidate heat pumps, wherein the quantity of candidate heat pumps is used to represent the quantity of heat pumps which are currently in operation in the heat pump system;
in response to that the target level is greater than the quantity of candidate heat pumps, calculating (208) a difference between the target level and the quantity of candidate heat pumps to obtain the first quantity of heat pumps, and controlling (208) heat pumps in the first quantity in the heat pump system to be turned on based on a first preset rule, wherein the target level is used to represent the total quantity of heat pumps to be in operation in the heat pump system;
in response to that the target level is less than the quantity of candidate heat pumps, calculating (209) a difference between the quantity of candidate heat pumps and the target level to obtain the second quantity of heat pumps, and controlling heat pumps in the second quantity in the heat pump system to be turned off based on a second preset rule;
continuing to control (210) heat pumps corresponding to the quantity of candidate heat pumps to be in operation in response to that the target level is equal to the quantity of candidate heat pumps.

12. The control method for the heat pump system according to claim 1, wherein obtaining the system requirement value of the current period and the historical level of the previous period and performing level prediction for the current period based on the system requirement value to obtain the candidate level, comprises:
obtaining a water temperature parameter set, and performing a calculation based on the water temperature parameter set and a preset system requirement formula to obtain the system requirement value of the current period, and obtaining the historical level of the previous period;
calling a preset level model to perform level prediction based on the system requirement value to obtain the candidate level.

13. A control apparatus for a heat pump system with a plurality of heat pumps, **characterized by** comprising:
an obtaining and determination module (701), configured to obtain a system requirement value of a current period and a historical level of a previous period, and perform level prediction for the current period based on the system requirement value to obtain a candidate level; wherein the historical level is used to represent the quantity of heat pumps that were in operation in the previous period of the current period, and the candidate level is used to represent the quantity of heat pumps that are to be in operation in the current period;
a comparison module (702), configured to compare the candidate level with the historical level to obtain a target level; wherein the target level is used to represent the total quantity of heat pumps to be in operation in the heat pump system;
a control module (703), configured to control one or more heat pumps in the heat pump system to be turned on or off based on the target level.

14. A control device (900) for a heat pump system, comprising: a memory (920) and at least one processor (910), wherein instructions are stored in the memory (920), the at least one processor calls the instructions in the memory (920), to cause the control device for the heat pump system to implement the control method for the heat pump system according to any one of claims 1 to 12.

15. A computer-readable storage medium having stored thereon instructions, wherein the instructions are executed by a processor to implement the control method for the heat pump system according to any one of claims 1 to 12.

## Patentansprüche

1. Steuerverfahren für ein Wärmepumpensystem mit einer Vielzahl von Wärmepumpen, **dadurch gekennzeichnet, dass** es Folgendes umfasst:
Erhalten (101, 301, 401, 501) eines Systemanforderungswerts einer aktuellen Periode und eines historischen Niveaus einer vorherigen Periode und Durchführen von Niveauvorhersage für die aktuelle Periode basierend auf dem Systemanforderungswert, um ein Kandidatenniveau zu erhalten; wobei das historische Niveau dazu verwendet wird, die Menge von Wärmepumpen darzustellen, die in der vorherigen Periode der aktuellen Periode in Betrieb waren, und das Kandidatenniveau dazu verwendet wird, die Menge von Wärmepumpen darzustellen, die in der aktuellen Periode in Betrieb sein sollen;
Vergleichen (102) des Kandidatenniveaus mit dem historischen Niveau, um ein Zielniveau zu erhalten; wobei das Zielniveau dazu verwendet wird, die Gesamtmenge von Wärmepumpen darzustellen, die in dem Wärmepumpensystem in Betrieb sein soll; und
Steuern (103) einer oder mehrerer Wärmepumpen in dem Wärmepumpensystem, die basierend auf dem Zielniveau ein- oder ausgeschaltet werden sollen.

2. Steuerverfahren für das Wärmepumpensystem nach Anspruch 1, wobei das Vergleichen des Kandidatenniveaus mit dem historischen Niveau zum Erhalten des Zielniveaus Folgendes umfasst:
Bestimmen (203, 302, 402, 502), ob das Kandidatenniveau größer ist als das historische Niveau, und Erhalten eines durchschnittlichen Lastverhältnisses und eines Wärmepumpentyps des Wärmepumpensystems, wobei der Wärmepumpentyp ein Festfrequenztyp oder ein Typ mit variabler Frequenz ist;
Durchführen (204, 403, 503) von Bestimmung basierend auf dem durchschnittlichen Lastverhältnis und dem Wärmepumpentyp, um das Zielniveau als Reaktion darauf zu erhalten, dass das Kandidatenniveau größer als das historische Niveau ist;
Durchführen (205, 404, 504) von Bestimmung basierend auf dem durchschnittlichen Lastverhältnis und dem Wärmepumpentyp, um das Zielniveau als Reaktion darauf zu erhalten, dass das Kandidatenniveau geringer als das historische Niveau ist; und
Bestimmen (206, 310, 410) des Zielniveaus basierend auf dem Wärmepumpentyp als Reaktion darauf, dass das Kandidatenniveau gleich dem historischen Niveau ist.

3. Steuerverfahren für das Wärmepumpensystem nach Anspruch 2, wobei das Durchführen von Bestimmung basierend auf dem durchschnittlichen Lastverhältnis und dem Wärmepumpentyp zum Erhalten des Zielniveaus als Reaktion darauf ist, dass das Kandidatenniveau größer ist als das historische Niveau, Folgendes umfasst:
Bestimmen (303), ob das durchschnittliche Lastverhältnis größer als ein erster voreingestellter Schwellenwert ist, wenn das Kandidatenniveau größer als das historische Niveau ist;
Bestimmen (304) des Kandidatenniveaus als das Zielniveau als Reaktion darauf, dass das durchschnittliche Lastverhältnis größer als der erste voreingestellte Schwellenwert ist;
Bestimmen (305) des historischen Niveaus als das Zielniveau, wenn der Wärmepumpentyp der Festfrequenztyp ist, als Reaktion darauf, dass das durchschnittliche Lastverhältnis größer als ein zweiter voreingestellter Schwellenwert und kleiner oder gleich dem ersten voreingestellten Schwellenwert ist;
Erhalten (306) einer ersten durchschnittlichen Betriebsfrequenz des Wärmepumpensystems, wenn der Wärmepumpentyp der Typ mit variabler Frequenz ist, und Erhalten des Zielniveaus basierend auf der ersten durchschnittlichen Betriebsfrequenz;
Bestimmen (307) des historischen Niveaus als das Zielniveau als Reaktion darauf, dass das durchschnittliche Lastverhältnis größer als null und kleiner oder gleich dem zweiten voreingestellten Schwellenwert ist; und
Bestimmen (308) des Kandidatenniveaus als das Zielniveau als Reaktion darauf, dass das durchschnittliche Lastverhältnis gleich null ist.

4. Steuerverfahren für das Wärmepumpensystem nach Anspruch 3, wobei das Erhalten der ersten durchschnittlichen Betriebsfrequenz des Wärmepumpensystems, wenn der Wärmepumpentyp der Typ mit variabler Frequenz ist, und Erhalten des Zielniveaus basierend auf der ersten durchschnittlichen Betriebsfrequenz Folgendes umfasst:
Erhalten der ersten durchschnittlichen Betriebsfrequenz des Wärmepumpensystems, wenn der Wärmepumpentyp der Typ mit variabler Frequenz ist;
Bestimmen des Kandidatenniveaus als das Zielniveau als Reaktion darauf, dass die erste durchschnittliche Betriebsfrequenz größer oder gleich einem ersten voreingestellten Frequenzwert ist; und
Bestimmen des historischen Niveaus als das Zielniveau als Reaktion darauf, dass die erste durchschnittliche Betriebsfrequenz kleiner ist als der erste voreingestellte Frequenzwert.

5. Steuerverfahren für das Wärmepumpensystem nach Anspruch 2, wobei das Durchführen von Bestimmung basierend auf dem durchschnittlichen Lastverhältnis und dem Wärmepumpentyp zum Erhalten des Zielniveaus als Reaktion darauf ist, dass das Kandidatenniveau kleiner ist als das historische Niveau, Folgendes umfasst:
Bestimmen (404), ob das durchschnittliche Lastverhältnis kleiner oder gleich einem zweiten voreingestellten Schwellenwert ist, wenn das Kandidatenniveau kleiner als das historische Niveau ist;
Bestimmen (405) des Kandidatenniveaus als das Zielniveau als Reaktion darauf, dass das durchschnittliche Lastverhältnis kleiner als der zweite voreingestellte Schwellenwert ist;
Bestimmen (406) des Kandidatenniveaus als das Zielniveau, wenn der Wärmepumpentyp der Festfrequenztyp ist, als Reaktion darauf, dass das durchschnittliche Lastverhältnis größer als der zweite voreingestellte Schwellenwert und kleiner oder gleich dem ersten voreingestellten Schwellenwert ist; und
Erhalten (407) einer zweiten durchschnittlichen Betriebsfrequenz des Wärmepumpensystems, wenn der Wärmepumpentyp der Typ mit variabler Frequenz ist, und Erhalten des Zielniveaus basierend auf der zweiten durchschnittlichen Betriebsfrequenz.

6. Steuerverfahren für das Wärmepumpensystem nach Anspruch 5, wobei das Erhalten der zweiten durchschnittlichen Betriebsfrequenz des Wärmepumpensystems, wenn der Wärmepumpentyp der Typ mit variabler Frequenz ist, und Erhalten des Zielniveaus basierend auf der zweiten durchschnittlichen Betriebsfrequenz Folgendes umfasst:
Erhalten der zweiten durchschnittlichen Betriebsfrequenz des Wärmepumpensystems, wenn der Wärmepumpentyp der Typ mit variabler Frequenz ist;
Bestimmen des Kandidatenniveaus als das Zielniveau als Reaktion darauf, dass die zweite durchschnittliche Betriebsfrequenz kleiner oder gleich einem zweiten voreingestellten Frequenzwert ist; und
Bestimmen des historischen Niveaus als das Zielniveau als Reaktion darauf, dass die zweite durchschnittliche Betriebsfrequenz größer ist als der zweite voreingestellte Frequenzwert.

7. Steuerverfahren für das Wärmepumpensystem nach Anspruch 5, das weiter Folgendes umfasst:
Im Anschluss an das Bestimmen, ob das durchschnittliche Lastverhältnis kleiner oder gleich dem zweiten voreingestellten Schwellenwert ist, wenn das Kandidatenniveau kleiner als das historische Niveau ist,
Bestimmen (408) des Kandidatenniveaus als das Zielniveau, wenn der Wärmepumpentyp der Festfrequenztyp ist, als Reaktion darauf, dass das durchschnittliche Lastverhältnis größer als der erste voreingestellte Schwellenwert ist; und
Erhalten (409) einer dritten durchschnittlichen Betriebsfrequenz des Wärmepumpensystems, wenn der Wärmepumpentyp der Typ mit variabler Frequenz ist, und Erhalten des Zielniveaus basierend auf der dritten durchschnittlichen Betriebsfrequenz.

8. Steuerverfahren für das Wärmepumpensystem nach Anspruch 7, wobei das Erhalten der dritten durchschnittlichen Betriebsfrequenz des Wärmepumpensystems, wenn der Wärmepumpentyp der Typ mit variabler Frequenz ist, und Erhalten des Zielniveaus basierend auf der dritten durchschnittlichen Betriebsfrequenz Folgendes umfasst:
Erhalten der dritten durchschnittlichen Betriebsfrequenz des Wärmepumpensystems, wenn der Wärmepumpentyp der Typ mit variabler Frequenz ist;
Bestimmen des Kandidatenniveaus als das Zielniveau als Reaktion darauf, dass die dritte durchschnittliche Betriebsfrequenz kleiner oder gleich einem zweiten voreingestellten Frequenzwert ist; und
Bestimmen des historischen Niveaus als das Zielniveau als Reaktion darauf, dass die dritte durchschnittliche Betriebsfrequenz größer ist als der zweite voreingestellte Frequenzwert.

9. Steuerverfahren für das Wärmepumpensystem nach Anspruch 2, wobei das Bestimmen des Zielniveaus basierend auf dem Wärmepumpentyp als Reaktion darauf, dass das Kandidatenniveau gleich dem historischen Niveau ist, Folgendes umfasst:
Bestimmen (505), ob der Wärmepumpentyp der Festfrequenztyp ist, wenn das Kandidatenniveau gleich dem historischen Niveau ist;
Bestimmen (506) des historischen Niveaus als Reaktion darauf, dass der Wärmepumpentyp der Festfrequenztyp ist;
Erhalten (507) einer vierten durchschnittlichen Betriebsfrequenz des Wärmepumpenprojekts, wenn der Wärmepumpentyp der Typ mit variabler Frequenz ist, und Erhalten des Zielniveaus basierend auf der vierten durchschnittlichen Betriebsfrequenz.

10. Steuerverfahren für das Wärmepumpensystem nach Anspruch 9, wobei das Erhalten der vierten durchschnittlichen Betriebsfrequenz des Wärmepumpenprojekts, wenn der Wärmepumpentyp der Typ mit variabler Frequenz ist, und Erhalten des Zielniveaus basierend auf der vierten durchschnittlichen Betriebsfrequenz Folgendes umfasst:
Erhalten der vierten durchschnittlichen Betriebsfrequenz des Wärmepumpensystems, wenn der Wärmepumpentyp der Typ mit variabler Frequenz ist;
Bestimmen des Kandidatenniveaus als das Zielniveau als Reaktion darauf, dass die vierte durchschnittliche Betriebsfrequenz kleiner oder gleich einem ersten voreingestellten Frequenzwert und größer oder gleich einem zweiten voreingestellten Frequenzwert ist;
Reduzieren des Kandidatenniveaus um ein Niveau, um das Zielniveau als Reaktion darauf zu erhalten, dass die vierte durchschnittliche Betriebsfrequenz kleiner ist als der zweite voreingestellte Frequenzwert; und
Erhöhen des Kandidatenniveaus um ein Niveau, um das Zielniveau als Reaktion darauf zu erhalten, dass die vierte durchschnittliche Betriebsfrequenz größer als der erste voreingestellte Frequenzwert ist.

11. Steuerverfahren für das Wärmepumpensystem nach einem der Ansprüche 1 bis 10, wobei das Steuern einer oder mehrerer Wärmepumpen in dem Wärmepumpensystem, die basierend auf dem Zielniveau ein- oder ausgeschaltet werden sollen, Folgendes umfasst:
Erhalten (207) der Menge von Kandidatenwärmepumpen, wobei die Menge von Kandidatenwärmepumpen dazu verwendet wird, die Menge von Wärmepumpen darzustellen, die aktuell in dem Wärmepumpensystem in Betrieb sind;
als Reaktion darauf, dass das Zielniveau größer als die Menge von Kandidatenwärmepumpen ist, Berechnen (208) einer Differenz zwischen dem Zielniveau und der Menge von Kandidatenwärmepumpen, um die erste Menge von Kandidatenwärmepumpe zu erhalten, und Steuern (208) von Wärmepumpen, die in der ersten Menge in dem Wärmepumpensystem basierend auf einer ersten voreingestellten Regel eingeschaltet werden sollen, wobei das Zielniveau dazu verwendet wird, die Gesamtmenge von Wärmepumpen, die in dem Wärmepumpensystem in Betrieb sein soll, darzustellen;
als Reaktion darauf, dass das Zielniveau kleiner ist als die Menge von Kandidatenwärmepumpen, Berechnen (209) einer Differenz zwischen der Menge von Kandidatenwärmepumpen und dem Zielniveau, um die zweite Menge von Wärmepumpen zu erhalten, und Steuern von Wärmepumpen in der zweiten Menge in dem Wärmepumpensystem, die basierend auf der zweiten voreingestellten Regel ausgeschaltet werden sollen;
Fortsetzen des Steuerns (210) von Wärmepumpen, die der Menge von Kandidatenwärmepumpen entsprechen, die in Betrieb sein sollen, als Reaktion darauf, dass das Zielniveau gleich der Menge von Kandidatenwärmepumpen ist.

12. Steuerverfahren für das Wärmepumpensystem nach Anspruch 1, wobei das Erhalten des Systemanforderungswerts der aktuellen Periode und das historische Niveau der vorherigen Periode und Durchführen von Niveauvorhersage für die aktuelle Periode basierend auf dem Systemanforderungswert zum Erhalten des Kandidatenniveaus Folgendes umfassen:
Erhalten eines Wassertemperaturparametersatzes und Durchführen einer Berechnung basierend auf dem Wassertemperaturparametersatz und einer voreingestellten Systemanforderungsformel, um den Systemanforderungswert der aktuellen Periode zu erhalten, und Erhalten des historischen Niveaus der vorherigen Periode;
Abrufen eines voreingestellten Niveaumodells, um Niveauvorhersage basierend auf dem Systemanforderungswert durchzuführen, um das Kandidatenniveau zu erhalten.

13. Steuergerät für ein Wärmepumpensystem mit einer Vielzahl von Wärmepumpen, **dadurch gekennzeichnet, dass** es Folgendes umfasst:
ein Modul (701) zum Erhalten und zur Bestimmung, das dazu konfiguriert ist, einen Systemanforderungswert einer aktuellen Periode und ein historisches Niveau einer vorherigen Periode zu erhalten und Niveauvorhersage für die aktuelle Periode basierend auf dem Systemanforderungswert durchzuführen, um ein Kandidatenniveau zu erhalten; wobei das historische Niveau dazu verwendet wird, die Menge von Wärmepumpen darzustellen, die in der vorherigen Periode der aktuellen Periode in Betrieb waren, und das Kandidatenniveau dazu verwendet wird, die Menge von Wärmepumpen darzustellen, die in der aktuellen Periode in Betrieb sein sollen;
ein Vergleichsmodul (702), das dazu konfiguriert ist, das Kandidatenniveau mit dem historischen Niveau zu vergleichen, um ein Zielniveau zu erhalten; wobei das Zielniveau dazu verwendet wird, die Gesamtmenge von Wärmepumpen, die in dem Wärmepumpensystem in Betrieb sein soll, darzustellen;
ein Steuermodul (703), das dazu konfiguriert ist, eine oder mehrere Wärmepumpen in dem Wärmepumpensystem, die basierend auf dem Zielniveau ein- oder ausgeschaltet werden sollen, zu steuern.

14. Steuervorrichtung (900) für ein Wärmepumpensystem, die Folgendes umfasst: einen Speicher (920) und mindestens einen Prozessor (910), wobei Anweisungen in dem Speicher (920) gespeichert sind, wobei der mindestens eine Prozessor die Anweisungen in dem Speicher (920) abruft, um die Steuervorrichtung für das Wärmepumpensystem zu veranlassen, das Steuerverfahren für das Wärmepumpensystem nach einem der Ansprüche 1 bis 12 umzusetzen.

15. Computerlesbares Speichermedium, auf dem Anweisungen gespeichert sind, wobei die Anweisungen von einem Prozessor ausgeführt werden, um das Steuerverfahren für das Wärmepumpensystem nach einem der Ansprüche 1 bis 12 umzusetzen.

## Revendications

1. Procédé de commande pour un système de pompes à chaleur comprenant une pluralité de pompes à chaleur, **caractérisé par le fait qu'**il comprend :
l'obtention (101, 301, 401, 501) d'une valeur d'exigence du système d'une période actuelle et d'un niveau historique d'une période antérieure, et l'exécution d'une prédiction de niveau pour la période actuelle sur la base de la valeur d'exigence du système pour obtenir un niveau candidat : le niveau historique étant utilisé pour représenter la quantité de pompes à chaleur qui étaient en fonctionnement pendant la période antérieure de la période actuelle, et le niveau candidate étant utilisé pour représenter la quantité de pompes à chaleur devant être en fonctionnement pendant la période actuelle :
la comparaison (102) du niveau candidat avec le niveau historique pour obtenir un niveau cible ; le niveau cible étant utilisé pour représenter la quantité totale de pompes à chaleur devant être en fonctionnement dans le système de pompes à chaleur ; et
la commande (103) d'une ou plusieurs pompes à chaleur dans le système de pompes à chaleur pour être activées ou désactivées sur la base du niveau cible.

2. Procédé de commande pour le système de pompes à chaleur selon la revendication 1, dans lequel la comparaison du niveau candidat avec le niveau historique pour obtenir le niveau cible comprend :
la détermination (203, 302, 402, 502) de si le niveau candidat est supérieur au niveau historique, et l'obtention d'un rapport de charge moyen et d'un type de pompe à chaleur du système de pompes à chaleur, le type de pompe a chaleur étant un type à fréquence fixe ou un type à fréquence variable ;
l'exécution (204, 403, 503) de la détermination sur la base du rapport de charge moyen et du type de pompe à chaleur pour obtenir le niveau cible en réponse au fait que le niveau candidat est supérieur au niveau historique ;
l'exécution (205, 404, 504) de la détermination sur la base du rapport de charge moyen et du type de pompe à chaleur pour obtenir le niveau cible en réponse au fait que le niveau candidat est inférieur au niveau historique ; et
la détermination (206, 310, 410) du niveau cible sur la base du type de pompe à chaleur en réponse au fait que le niveau candidat est égal au niveau historique.

3. Procédé de commande pour le système de pompes à chaleur selon la revendication 2, dans lequel l'exécution de la détermination sur la base du rapport de charge moyen et du type de pompe à chaleur pour obtenir le niveau cible en réponse au fait que le niveau candidat est supérieur au niveau historique comprend :
la détermination (303) de si le rapport de charge moyen est supérieur à un premier seuil prédéfini lorsque le niveau candidat est supérieur au niveau historique ;
la détermination (304) du niveau candidat comme le niveau cible en réponse au fait que le rapport de charge moyen est supérieur au premier seuil prédéfini ;
la détermination (305) du niveau historique comme le niveau cible lorsque le type de pompe à chaleur est le type à fréquence fixe en réponse au fait que le rapport de charge moyen est supérieur à un deuxième seuil prédéfini et inférieur ou égal au premier seuil prédéfini ;
l'obtention (306) d'une première fréquence de fonctionnement moyenne du système de pompes à chaleur lorsque le type de pompe à chaleur est le type à fréquence variable, et l'obtention du niveau cible sur la base de la première fréquence de fonctionnement moyenne ;
la détermination (307) du niveau historique comme le niveau cible en réponse au fait que le rapport de charge moyen est supérieur à zéro et inférieur ou égal au deuxième seuil prédéfini ; et
la détermination (308) du niveau candidat comme le niveau cible en réponse au fait que le rapport de charge moyen est égal a zéro.

4. Procédé de commande du système de pompes à chaleur selon la revendication 3, dans lequel l'obtention de la première fréquence de fonctionnement moyenne du système de pompes à chaleur lorsque le type de pompe à chaleur est le type à fréquence variable et l'obtention du niveau cible sur la base de la première fréquence de fonctionnement moyenne comprend :
l'obtention de la première fréquence de fonctionnement moyenne du système de pompes à chaleur lorsque le type de pompe à chaleur est le type à fréquence variable ;
la détermination du niveau candidat comme le niveau cible en réponse au fait que la première fréquence de fonctionnement moyenne est supérieure ou égale à une première valeur de fréquence prédéfinie ;
la détermination du niveau historique comme le niveau cible en réponse au fait que la première fréquence de fonctionnement moyenne est inférieure à la première valeur de fréquence prédéfinie.

5. Procédé de commande pour le système de pompes à chaleur selon la revendication 2, dans lequel l'exécution de la détermination sur la base du rapport de charge moyen et du type de pompe à chaleur pour obtenir le niveau cible en réponse au fait que le niveau candidat est inférieur au niveau historique comprend :
la détermination (404) de si le rapport de charge moyen est inférieur ou égal à un deuxième seuil prédéfini lorsque le niveau candidat est inférieur au niveau historique ;
la détermination (405) du niveau candidat comme le niveau cible en réponse au fait que le rapport de charge moyen est inférieur ou égal au deuxième seuil prédéfini ;
la détermination (406) du niveau candidat comme le niveau cible lorsque le type de pompe à chaleur est le type à fréquence fixe en réponse au fait que le rapport de charge moyen est supérieur au deuxième seuil prédéfini et inférieur ou égal au premier seuil prédéfini ; et
l'obtention (407) d'une deuxième fréquence de fonctionnement moyenne du système de pompes à chaleur lorsque le type de pompe à chaleur est le type à fréquence variable, et l'obtention du niveau cible sur la base de la deuxième fréquence de fonctionnement moyenne.

6. Procédé de commande du système de pompes à chaleur selon la revendication 5, dans lequel l'obtention de la deuxième fréquence de fonctionnement moyenne du système de pompes à chaleur lorsque le type de pompe à chaleur est le type à fréquence variable et l'obtention du niveau cible sur la base de la deuxième fréquence de fonctionnement moyenne comprend :
l'obtention de la deuxième fréquence de fonctionnement moyenne du système de pompes à chaleur lorsque le type de pompe à chaleur est le type à fréquence variable ;
la détermination du niveau candidat comme le niveau cible en réponse au fait que la deuxième fréquence de fonctionnement moyenne est inférieure ou égale à une deuxième valeur de fréquence prédéfinie ; et
la détermination du niveau historique comme le niveau cible en réponse au fait que la deuxième fréquence de fonctionnement moyenne est supérieure à la deuxième valeur de fréquence prédéfinie.

7. Procédé de commande pour le système de pompes à chaleur selon la revendication 5, comprenant, en outre :
ultérieurement à la détermination de si le rapport de charge moyen est inférieur ou égal au deuxième seuil prédéfini lorsque le niveau candidat est inférieur au niveau historique,
la détermination (408) du niveau candidat comme le niveau cible lorsque le type de pompe à chaleur est le type à fréquence fixe en réponse au fait que le rapport de charge moyen est supérieur au premier seuil prédéfini ; et
l'obtention (409) d'une troisième fréquence de fonctionnement moyenne du système de pompes à chaleur lorsque le type de pompe à chaleur est le type à fréquence variable, et l'obtention du niveau cible sur la base de la troisième fréquence de fonctionnement moyenne.

8. Procédé de commande du système de pompes à chaleur selon la revendication 7, dans lequel l'obtention de la troisième fréquence de fonctionnement moyenne du système de pompes à chaleur lorsque le type de pompe à chaleur est le type à fréquence variable et l'obtention du niveau cible sur la base de la troisième fréquence de fonctionnement moyenne comprend :
l'obtention de la troisième fréquence de fonctionnement moyenne du système de pompes à chaleur lorsque le type de pompe à chaleur est le type à fréquence variable ;
la détermination du niveau candidat comme le niveau cible en réponse au fait que la troisième fréquence de fonctionnement moyenne est inférieure ou égale à une deuxième valeur de fréquence prédéfinie ; et
la détermination du niveau historique comme le niveau cible en réponse au fait que la troisième fréquence de fonctionnement moyenne est supérieure à la deuxième valeur de fréquence prédéfinie.

9. Procédé de commande pour le système de pompes à chaleur selon la revendication 2, dans lequel la détermination du niveau cible sur la base du type de pompe à chaleur en réponse au fait que le niveau candidat est égal au niveau historique comprend :
la détermination (505) de si le type de pompe à chaleur est le type à fréquence fixe lorsque le niveau candidat est égal au niveau historique ;
la détermination (506) du niveau historique comme le niveau cible en réponse au fait que le type de pompe à chaleur est le type à fréquence fixe ;
l'obtention (507) d'une quatrième fréquence de fonctionnement moyenne du projet de pompes à chaleur lorsque le type de pompe à chaleur est le type à fréquence variable, et l'obtention du niveau cible sur la base de la quatrième fréquence de fonctionnement moyenne.

10. Procédé de commande du système de pompes à chaleur selon la revendication 9, dans lequel l'obtention de la quatrième fréquence de fonctionnement moyenne du projet de pompes à chaleur lorsque le type de pompe à chaleur est le type à fréquence variable et l'obtention du niveau cible sur la base de la quatrième fréquence de fonctionnement moyenne comprend :
l'obtention de la quatrième fréquence de fonctionnement moyenne du système de pompes à chaleur lorsque le type de pompe à chaleur est le type à fréquence variable ;
la détermination du niveau candidat comme le niveau cible en réponse au fait que la quatrième fréquence de fonctionnement moyenne est inférieure ou égale à une première valeur de fréquence prédéfinie et supérieure ou égale à une deuxième valeur de fréquence prédéfinie ; et
la réduction du niveau candidat d'un niveau pour obtenir le niveau cible en réponse au fait que la quatrième fréquence de fonctionnement moyenne est inférieure à la deuxième valeur de fréquence prédéfinie ; et
l'augmentation du niveau candidat d'un niveau pour obtenir le niveau cible en réponse au fait que la quatrième fréquence de fonctionnement moyenne est supérieure à la première valeur de fréquence prédéfinie.

11. Procédé de commande pour le système de pompes à chaleur selon l'une quelconque des revendications 1 à 10, dans lequel la commande d'une ou plusieurs pompes à chaleur dans le système de pompes à chaleur pour être activées ou désactivées sur la base du niveau cible comprend :
l'obtention (207) de la quantité de pompes à chaleur candidates, la quantité de pompes à chaleur candidates étant utilisée pour représenter la quantité de pompes à chaleur qui sont actuellement en fonctionnement dans le système de pompes à chaleur ;
en réponse au fait que le niveau cible est supérieur à la quantité de pompes à chaleur candidates, le calcul (208) d'une différence entre le niveau cible et la quantité de pompes à chaleur candidates pour obtenir la première quantité de pompes à chaleur, et la commande (208) de pompes à chaleur dans la quantité dans le système de pompes à chaleur pour être activées sur la base d'une première règle prédéfinie, le niveau cible est utilisé pour représenté la quantité totale de pompes à chaleur devant être en fonctionnement dans le système de pompes à chaleur ;
en réponse au fait que le niveau cible est inférieur à la quantité de pompes à chaleur candidates, le calcul (209) d'une différence entre la quantité de pompes à chaleur candidates et le niveau cible pour obtenir la deuxième quantité de pompes à chaleur, et la commande de pompes à chaleur dans la deuxième quantité dans le système de pompes à chaleur devant être désactivées sur la base d'une deuxième règle prédéfinie ;
la poursuite de la commande (210) de pompes à chaleur correspondant à la quantité de pompes à chaleur candidates devant être en fonctionnement en réponse au fait que le niveau cible est égal à la quantité de pompes à chaleur candidates.

12. Procédé de commande pour le système de pompes à chaleur selon la revendication 1, dans lequel l'obtention de la valeur d'exigence du système de la période actuelle et du niveau historique de la période antérieure et l'exécution la prédiction de niveau pour la période actuelle sur la base de la valeur d'exigence du système pour obtenir le niveau candidat comprend :
l'obtention d'un ensemble de paramètres de température d'eau, et l'exécution d'un calcul sur la base de l'ensemble de paramètres de température d'eau et d'une formule d'exigence du système prédéfinie pour obtenir la valeur d'exigence du système de la période actuelle, et l'obtention du niveau historique de la période antérieure ;
l'appel d'un modèle de niveau prédéfini pour exécuter la prédiction de niveau sur la base de la valeur d'exigence du système pour obtenir le niveau candidat.

13. Appareil de commande pour un système de pompes à chaleur comprenant une pluralité de pompes à chaleur, **caractérisé par le fait qu'**il comprend :
un module d'obtention et de détermination (701), conçu pour obtenir une valeur d'exigence du système d'une période actuelle et un niveau historique d'une période antérieure, et pour exécuter une prédiction de niveau pour la période actuelle sur la base de la valeur d'exigence du système pour obtenir un niveau candidat : le niveau historique étant utilisé pour représenter la quantité de pompes à chaleur qui étaient en fonctionnement pendant la période antérieure de la période actuelle, et le niveau candidate étant utilisé pour représenter la quantité de pompes à chaleur devant être en fonctionnement pendant la période actuelle :
un module de comparaison (702), conçu pour comparer le niveau candidat avec le niveau historique pour obtenir un niveau cible ; le niveau cible étant utilisé pour représenter la quantité totale de pompes à chaleur devant être en fonctionnement dans le système de pompes à chaleur ;
un module de commande (703), conçu pour commander une ou plusieurs pompes à chaleur dans le système de pompes à chaleur pour être activées ou désactivées sur la base du niveau cible.

14. Dispositif de commande (900) pour un système de pompes à chaleur, comprenant : une mémoire (920) et au moins un processeur (910), dans lequel des instructions sont stockées dans la mémoire (920), l'au moins un processeur appelle les instructions dans la mémoire (920), pour amener le dispositif de commande pour le système de pompes à chaleur à mettre en œuvre le procédé de commande pour le système de pompes à chaleur selon l'une quelconque des revendications 1 à 12.

15. Support de stockage lisible par ordinateur, sur lequel sont stockées des instructions, dans lequel les instructions sont exécutées par un processeur pour mettre en œuvre le procédé de commande pour le système de pompes à chaleur selon l'une des revendications 1 à 12.
